# DEMANDE DE BREVET EUROPEEN

(11) **EP 4 682 405 A1**
(43) Date de publication de la demande: **21.01.2026**
(21) Numéro de dépôt: 25187729.6
(22) Date de dépôt: 07.07.2025
(51) Int. Cl.: F16H 57/027, F16H 57/031, F16H 57/04

(54) **MÉCANISME DE TRANSMISSION À LUBRIFICATION INTERNE ET ENSEMBLE DE PROPULSION ÉLECTRIQUE ASSOCIÉ**

(30) Priorité: 16.07.2024 FR 2407759
(71) Demandeur: VALEO EMBRAYAGES, 80009 Amiens (FR)
(72) Inventeur: KLEIN, Vincent, 95892 Cergy Pontoise (FR); SOURIMANT, Stephane, 95892 Cergy Pontoise (FR)
(74) Mandataire: Valeo Powertrain Systems

(57) **Abrégé**

L'invention porte sur un mécanisme de transmission (M) à lubrification interne, comprenant :
- un dispositif de réduction de vitesse comprenant un premier arbre de transmission (10) s'étendant le long d'un premier axe de rotation (X1) et portant de façon coaxiale une première roue dentée (11),
- un carter (40b) en forme de creux comprenant une embase (45) et une paroi périphérique (46) issue de matière avec l'embase,
- un reniflard (70) supporté par le carter (40b),
- un collecteur (50) de réception et de distribution de lubrifiant disposé dans le carter (40b) entre la paroi périphérique (46) et le premier axe de rotation (X1), dans lequel le collecteur (50) comprend au moins un fond (54), un pourtour extérieur (58) et une paroi de protection additionnelle (60) liée au pourtour extérieur, la paroi de protection additionnelle (60) recouvrant au moins partiellement l'entrée d'une cavité de réception du reniflard.

## Description

### DOMAINE TECHNIQUE DE L'INVENTION

L'invention se rapporte à la lubrification interne, par exemple par barbotage, des composants d'un mécanisme de transmission, et notamment d'un mécanisme de transmission comprenant un dispositif de réduction de vitesse.

### ÉTAT DE LA TECHNIQUE ANTÉRIEURE

Pour réaliser la lubrification des composants d'un mécanisme de transmission, et notamment des paliers de guidage en rotation et des engrenages d'un tel mécanisme, il est connu de disposer les composants mobiles du mécanisme à l'intérieur d'un carter contenant de l'huile de lubrification. Cependant les composants mobiles, par exemple les arbres de transmission supportant le pignon et la roue dentée d'un engrenage, ne sont pas totalement immergés dans l'huile. C'est alors la mise en mouvement du mécanisme de transmission qui vient, par barbotage, brasser l'huile et la projeter dans l'ensemble du volume intérieur du carter, pour assurer la lubrification souhaitée de l'ensemble du mécanisme, y compris les parties non immergées.

Pour éviter la surchauffe de ce genre de mécanisme de transmission, une mise à l'air libre est nécessaire. Cette mise à l'air libre peut se faire en utilisant un composant additionnel appelé « reniflard » configuré pour empêcher qu'une pression dans l'espace renfermé par le carter ne devienne trop élevée par rapport à une pression à l'extérieur de l'espace. Inversement, le reniflard évite qu'une pression dans l'espace renfermé par le carter ne devienne trop faible par rapport à une pression à l'extérieur de l'espace qui conduirait à un risque d'aspiration des éléments extérieurs (eau, poussière, ...).

Le document FR3115581 A1 divulgue un tel mécanisme de transmission équipé d'une mise à l'air libre. Dans ce document, la mise à l'air libre se situe au niveau d'un des paliers de guidage d'un arbre de transmission. Cette configuration est contraignante en terme de conception car il n'est pas toujours possible d'utiliser cette zone du carter selon l'environnement imposé par le constructeur du véhicule.

De manière générale, une mise à l'air libre d'un mécanisme de transmission présente des risques de colmatage du reniflard, de fuite d'huile de lubrification, du fait de la compacité du réducteur et de la vitesse de rotation élevée qui sont à l'origine de projections d'huile dans tout le volume intérieur du carter.

### EXPOSE DE L'INVENTION

L'invention vise à remédier aux inconvénients de l'état de la technique et à proposer un mécanisme de transmission combinant une bonne lubrification des composants du dispositif de réduction de vitesse et une mise à l'air libre fiable, exempte de fuite de lubrifiant.

Pour ce faire est proposé, selon un premier aspect de l'invention, un mécanisme de transmission à lubrification interne, comprenant :
- un dispositif de réduction de vitesse comprenant au moins un premier arbre de transmission s'étendant le long d'un premier axe de rotation X1 et portant de façon coaxiale une première roue dentée,
- un carter en forme de creux comprenant une embase et une paroi périphérique issue de matière avec l'embase, la paroi périphérique entourant en partie le dispositif de réduction de vitesse,
- un reniflard supporté par le carter, une première extrémité du reniflard débouchant dans une cavité de réception du reniflard formée dans le carter,
- un collecteur de réception et de distribution de lubrifiant disposé dans le carter entre la paroi périphérique et le premier axe de rotation X1,
dans lequel le collecteur de réception et de distribution de lubrifiant comprend un fond et un pourtour extérieur qui forment au moins un premier réceptacle pour le lubrifiant et une paroi de protection additionnelle qui fait saillie en dehors du premier réceptacle, la paroi de protection additionnelle recouvrant au moins partiellement l'entrée de la cavité de réception du reniflard.

Ce mécanisme de transmission avec son collecteur de réception et de distribution de lubrifiant équipé de sa paroi de protection additionnelle présente l'avantage de protéger le reniflard de toute projection de lubrifiant. Le reniflard est notamment configuré pour empêcher qu'une pression dans l'espace renfermé par le carter ne devienne trop élevée par rapport à une pression à l'extérieur de l'espace. La paroi de protection additionnelle empêche la projection directe de lubrifiant à l'intérieur de la cavité de réception du reniflard et sur le reniflard lui-même.

Le collecteur de réception et de distribution de lubrifiant occupe une position centrale au sein du dispositif de réduction de vitesse ce qui lui permet de recevoir toutes les projections de lubrifiant en provenance de la première roue dentée mais aussi d'autres roues dentées présentes également au sein du dispositif de réduction de vitesse.

De préférence, la paroi de protection additionnelle fait saillie depuis les surfaces externes du premier réceptacle formées par le fond et le pourtour extérieur. Les surfaces internes du premier réceptacle sont en contact avec le lubrifiant collecté au sein du collecteur de réception et de distribution de lubrifiant.

Avantageusement, la paroi de protection additionnelle s'étend depuis l'extérieur du premier réceptacle. De cette manière, le flux du lubrifiant au sein du collecteur de réception et de distribution de lubrifiant, et notamment au sein du premier réceptacle, n'est pas perturbé par la paroi de protection additionnelle.

Au sens de l'invention, le terme « recouvrir » veut aussi bien dire recouvrir avec contact que recouvrir sans contact.

Par exemple, la paroi de protection additionnelle peut être décalée axialement selon le premier axe de rotation X1 par rapport à l'entrée de la cavité de réception du reniflard. Le décalage axial est alors compris entre 1 et 5 mm, par exemple 2 mm.

Par exemple, la paroi de protection additionnelle peut venir en appui sur le carter et recouvrir avec contact une partie de l'entrée de la cavité de réception du reniflard.

De préférence, le collecteur de réception et de distribution de lubrifiant est disposé axialement, selon le premier axe de rotation X1, entre l'embase du carter et la première roue dentée, la première roue dentée tournant autour du premier axe de rotation X1 selon un sens privilégié, le collecteur faisant face directement à la première roue dentée de manière à recevoir le lubrifiant projeté par la denture. Grace à l'orientation de la denture hélicoïdale, on projette le lubrifiant en direction du collecteur de réception et de distribution de lubrifiant. Cela présente l'avantage de récupérer et de distribuer une quantité importante de lubrifiant présent au sein du dispositif de réduction de vitesse, tout en conservant le principe de lubrification passive.

Avantageusement, la périphérie externe de la première roue dentée peut s'étendre radialement au-delà du pourtour extérieur du collecteur de réception et de distribution de lubrifiant. On facilite de cette manière la récupération du lubrifiant.

Selon un aspect de l'invention, la paroi de protection additionnelle est issue de matière avec le pourtour extérieur et/ou le fond, la paroi de protection additionnelle comprend une portion de raccordement qui fait la jonction avec le pourtour extérieur et/ou le fond. Le collecteur de réception et de distribution de lubrifiant reste simple à fabriquer, notamment lorsqu'il est obtenu par un procédé d'injection plastique.

De préférence, la portion de raccordement est orientée perpendiculairement à la paroi de protection additionnelle.

Avantageusement, des nervures de rigidification relient le pourtour extérieur à la paroi de protection additionnelle.

Selon un autre aspect de l'invention, la paroi de protection additionnelle est rapportée sur le pourtour extérieur et/ou le fond, la paroi de protection additionnelle comprend une portion d'appui qui fait la jonction avec le pourtour extérieur et/ou le fond.

De préférence, la portion d'appui est fixée par rivetage, ou par soudage à chaud, ou par collage sur le pourtour extérieur et/ou le fond.

Selon un autre aspect de l'invention, le mécanisme de transmission comprend un premier palier de guidage supportant le premier arbre de transmission par rapport au carter, le premier palier de guidage étant inséré dans un premier logement cylindrique aménagé dans le carter, le collecteur de réception et de distribution de lubrifiant comprenant une conduite de sortie de lubrifiant débouchant en direction du logement cylindrique.

De préférence, la conduite de sortie de lubrifiant est maintenue en position sur le collecteur de réception et de distribution de lubrifiant par l'intermédiaire d'un raidisseur issu de matière avec le fond.

Le mécanisme de transmission selon l'invention peut présenter l'une ou l'autre des caractéristiques décrites ci-dessous combinées entre elles ou prises indépendamment les unes des autres :
- l'entrée de la cavité de réception du reniflard débouche dans l'embase et/ou la paroi périphérique du carter.
- le reniflard comprend un corps allongé défini par une première extrémité, une seconde extrémité et une conduite d'air s'étendant de la première extrémité à la seconde extrémité.
- la première roue dentée tourne autour du premier axe de rotation selon un sens privilégié, le collecteur de réception et de distribution de lubrifiant faisant face à la première roue dentée de manière à recevoir le lubrifiant projeté par la denture. Selon un exemple, le sens privilégié de rotation de la première roue dentée est celui qui permet au véhicule automobile d'avancer en marche avant.
- le collecteur de réception et de distribution de lubrifiant comprend un premier réceptacle et un deuxième réceptacle disposés de part et d'autre de la première roue dentée.
- le collecteur de réception et de distribution de lubrifiant comprend une ouverture centrale disposée entre le premier réceptacle et le deuxième réceptacle au sein de laquelle la première roue dentée est insérée partiellement de manière à pouvoir projeter du lubrifiant depuis la denture vers le fond du collecteur de réception et de distribution de lubrifiant, le fond du collecteur de réception et de distribution de lubrifiant entourant complètement l'ouverture centrale.
- la paroi périphérique du carter comprend une surface cylindrique coaxiale au premier axe de rotation qui entoure partiellement la périphérie externe de la première roue dentée.
- le carter est un carter principal apte à supporter une machine électrique qui comprend un plan de joint apte à accueillir le plan de joint d'un carter de fermeture, l'entrée de la cavité de réception du reniflard étant disposée axialement selon le premier axe de rotation X1 entre l'embase du carter principal et le plan de joint du carter principal, la paroi de protection additionnelle est disposée axialement entre l'entrée de la cavité de réception du reniflard et le plan de joint du carter principal.
- le carter est un carter de fermeture qui comprend un plan de joint apte à accueillir le plan de joint d'un carter principal, l'entrée de la cavité de réception du reniflard étant disposée axialement selon le premier axe de rotation X1 entre l'embase du carter de fermeture et le plan de joint du carter de fermeture, la paroi de protection additionnelle est disposée axialement entre l'entrée de la cavité de réception du reniflard et le plan de joint du carter de fermeture.
- le carter comprend un carter principal et un carter de fermeture rapporté sur le carter principal de sorte à former une enceinte close autour du dispositif de réduction de vitesse, le collecteur de réception et de distribution de lubrifiant étant maintenu en position partiellement par le carter principal et partiellement par le carter de fermeture.
- le carter de fermeture comporte sur sa face interne au moins un larmier situé à l'aplomb du collecteur de réception et de distribution de lubrifiant.
- une partie du contour extérieur de la paroi de protection additionnelle est une homothétie du contour d'entrée de la cavité de réception du reniflard selon un rapport d'échelle. L'homothétie correspond à une reproduction du contour avec changement d'échelle de sorte que l'on ait soit un agrandissement, soit une réduction selon un certain rapport.
- la paroi de protection additionnelle comprend un capot de protection décalé axialement qui est inséré dans la cavité, le capot de protection étant lié solidairement à la paroi de protection additionnelle. On améliore ainsi la protection contre les projections de lubrifiant. Le capot de protection est distinct de la paroi de protection additionnelle.
- une protubérance de carter entoure la paroi de protection additionnelle pour former une chicane supplémentaire. On améliore ainsi la protection contre les projections de lubrifiant.
Toutes ces caractéristiques participent à une bonne lubrification des composants du dispositif de réduction de vitesse et une mise à l'air libre fiable, exempte de fuite de lubrifiant.

L'invention a également pour objet, selon un autre de ses aspects, un ensemble de propulsion électrique comportant une machine électrique et un mécanisme de transmission reprenant tout ou partie des caractéristiques mentionnées précédemment, le système de réduction de vitesse comprenant un deuxième arbre de transmission guidé en rotation autour d'un deuxième axe de rotation X2 par un deuxième palier de guidage, et un troisième arbre de transmission guidé en rotation autour d'un troisième axe de rotation X3 par un troisième palier de guidage, l'un des arbres de transmission choisi parmi le premier, le deuxième et le troisième arbre de transmission est solidaire en rotation de l'arbre de rotor de la machine électrique.

De préférence, un premier palier de guidage supporte le premier arbre de transmission par rapport au carter, le premier palier de guidage étant inséré dans un premier logement cylindrique aménagé dans le carter, le deuxième palier de guidage étant inséré dans un deuxième logement cylindrique aménagé dans le carter, le troisième palier de guidage étant inséré dans un troisième logement cylindrique aménagé dans le carter, le collecteur de réception et de distribution de lubrifiant comprenant des conduites de sortie de lubrifiant débouchant en direction du logement cylindrique d'au moins deux paliers de guidage choisis parmi le premier, le deuxième et le troisième palier de guidage.

D'autres caractéristiques et avantages de l'invention sont mis en évidence par la description ci-après d'exemples non limitatifs de réalisation des différents aspects de l'invention.

### BRÈVE DESCRIPTION DES FIGURES

D'autres caractéristiques et avantages de l'invention ressortiront à la lecture de la description qui suit, en référence aux figures annexées, qui illustrent :
[Fig. 1] : une vue isométrique d'un mécanisme de transmission selon un premier mode de réalisation, représenté sans le carter principal.
[Fig. 2] : une vue partielle du mécanisme de transmission de la figure 1.
[Fig. 3] : une vue en coupe du mécanisme de transmission selon le premier mode de réalisation de la figure 1.
[Fig. 4] : une vue isométrique du collecteur de réception et de distribution de lubrifiant selon le premier mode de réalisation de la figure 1.
[Fig. 5] : une vue en coupe d'un mécanisme de transmission selon un deuxième mode de réalisation.

### DESCRIPTION DÉTAILLÉE D'UN MODE DE RÉALISATION

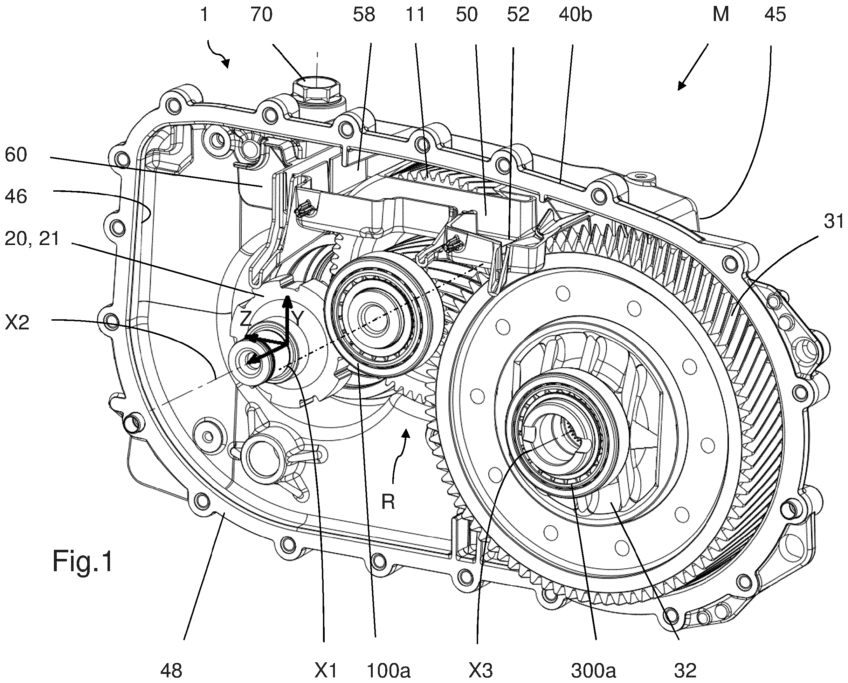

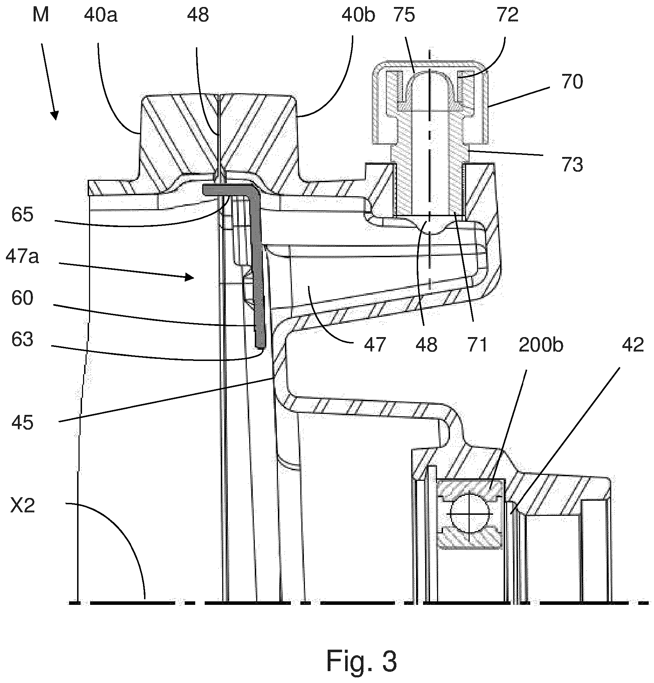

On a représenté sur les figures 1 à 4 un mécanisme de transmission M à lubrification interne selon un premier mode de réalisation de l'invention. Ce mécanisme de transmission M est intégré au sein d'un ensemble de propulsion électrique 1 d'un véhicule, notamment d'un véhicule automobile électrique, ou bien un groupe motopropulseur secondaire. Par exemple, il peut s'agir d'un groupe motopropulseur électrique secondaire d'un véhicule hybride, en particulier destiné au train arrière du véhicule.

Dans la description et les revendications, on utilisera, les termes « externe » et « interne » ainsi que les orientations « axiale » et « radiale » pour désigner, selon les définitions données dans la description, des éléments du système de transmission. Par convention, l'orientation « axiale » se rapporte aux axes de référence X, Y ou Z ou à des directions parallèles à ces axes, et l'orientation « radiale » est dirigée orthogonalement aux axes de référence X, Y et Z. Un élément « radialement interne » est situé plus proche de l'axe de référence qu'un élément « radialement externe ».

Les termes « supérieur », « inférieur », « haut », « bas », et « fond » doivent être pris en considération en regardant le mécanisme de transmission M dans une position/inclinaison similaire à la sienne lorsqu'il est monté sur un véhicule stationné à l'horizontale.

L'ensemble de propulsion électrique 1 comprend une machine électrique et le mécanisme de transmission M qui transmet le couple issu de la machine électrique vers les roues du véhicule électrique ou hybride.

La machine électrique (non représentée) peut être par exemple un moteur électrique à induction, comportant un rotor et un stator, alimenté électriquement en courant alternatif triphasé par des batteries d'accumulateurs par le biais d'un convertisseur de courant. La machine électrique peut être d'un autre type, par exemple à flux axial.

La machine électrique est maintenue sur un carter 40a, 40b. Le carter est généralement composé d'un carter principal 40a supportant la machine électrique et d'un carter de fermeture 40b venant en appui sur le carter principal 40a, au niveau d'un plan de joint 48, pour clore de façon étanche un espace délimité par le carter principal 40a et le carter de fermeture 40b. La machine électrique entraîne en rotation un arbre d'entrée du mécanisme de transmission M qui pénètre dans le carter principal 40a.

Le mécanisme de transmission M comprend un dispositif de réduction de vitesse R comprenant un premier arbre de transmission 10 qui s'étend le long d'un premier axe de rotation X1 et qui porte de façon coaxiale une première roue dentée 11. Un premier palier de guidage 100b supporte le premier arbre de transmission 10 par rapport au carter de fermeture 40b, le premier palier de guidage 100b étant inséré dans un premier logement cylindrique 41 aménagé dans le carter de fermeture 40b. Un autre premier palier de guidage 100a supporte le premier arbre de transmission 10 par rapport au carter principal 100a.

Le premier arbre de transmission 10 mentionné précédemment correspond à l'arbre intermédiaire du dispositif de réduction de vitesse R qui sera décrit ci-dessous dans les différents modes de réalisation.

Le dispositif de réduction de vitesse R comprend un deuxième arbre de transmission 20 correspondant à l'arbre d'entrée du mécanisme de transmission M destiné à être entrainé par la machine électrique. Cet arbre d'entrée du mécanisme de transmission M est solidaire en rotation de l'arbre moteur de la machine électrique. Ce deuxième arbre de transmission 20 est guidé en rotation autour d'un deuxième axe de rotation X2 par un deuxième palier de guidage 200a. Le deuxième palier de guidage 200a supporte le deuxième arbre de transmission 20 par rapport au carter principal 40a, le deuxième palier de guidage 200a étant inséré dans un deuxième logement cylindrique 42 aménagé dans le carter principal 40a. Un autre deuxième palier de guidage supporte le deuxième arbre de transmission 20 par rapport au carter principal 40a.

Le dispositif de réduction de vitesse R comprend également un troisième arbre de transmission 30 guidé en rotation autour d'un troisième axe de rotation X3 par un troisième palier de guidage 300a, 300b. Le troisième arbre de transmission 30, autrement appelé arbre de sortie du mécanisme de transmission M, comprend une roue dentée de sortie de couple 31. Le troisième arbre de transmission 30 comporte, en outre, une liaison fixe en rotation avec un porte-satellites d'un différentiel 32, ou constitue le porte-satellites du différentiel 32.

Le premier arbre de transmission 10 supporte la première roue dentée 11 et un pignon intermédiaire 12. La première roue dentée 11 forme un premier étage de réduction avec le premier pignon 21 du deuxième arbre de transmission 20, et le pignon intermédiaire 12 forme un deuxième étage de réduction avec la roue dentée de sortie de couple 31 du troisième arbre de transmission 30.

Les premier, deuxième et troisième axes de rotation X1, X2, X3 sont parallèles entre eux.

Le carter de fermeture 40b en forme de creux comprend une embase 45 et une paroi périphérique 46 issue de matière avec l'embase, la paroi périphérique entourant en partie le dispositif de réduction de vitesse R. La paroi périphérique 46 entoure en partie la première roue dentée 11. Dans cet exemple, le dispositif de réduction de vitesse comprend un seul rapport de vitesse.

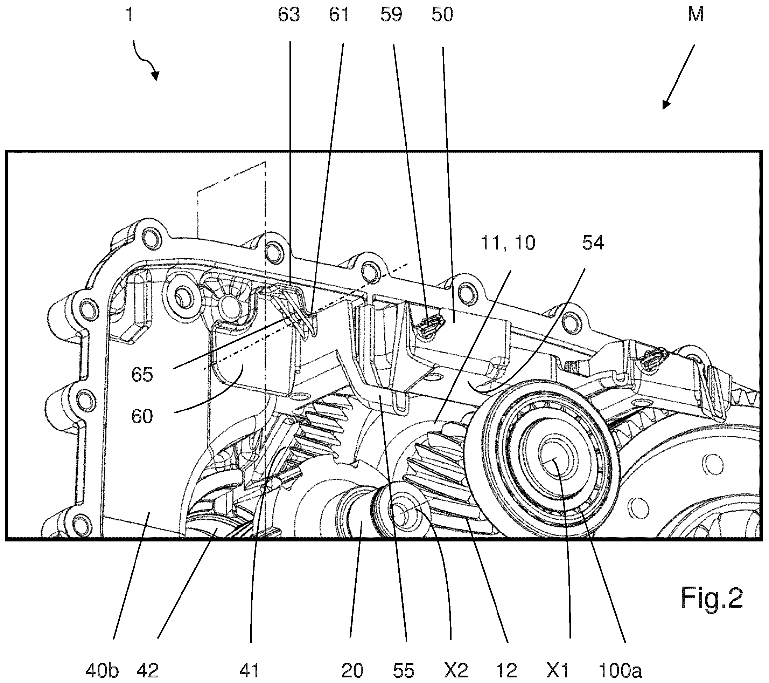

La figure 1 est une vue isométrique du mécanisme de transmission M selon le premier mode de réalisation de l'invention représenté sans son carter principal de manière à visualiser l'intérieur du dispositif de réduction de vitesse. La figure 2 représente partiellement le même mécanisme de transmission M.

Le mécanisme de transmission M comprend également un reniflard 70 fixé sur une des parois du carter de fermeture 40b. Le reniflard 70 est notamment configuré pour empêcher qu'une pression dans l'espace renfermé par le carter 40a, 40b ne devienne trop élevée par rapport à une pression à l'extérieur de l'espace.

Le reniflard 70 comprend un corps allongé 73 défini par une première extrémité 71, une seconde extrémité 72 et une conduite d'air s'étendant de la première extrémité à la seconde extrémité. Le reniflard 70 comporte également un élément de ventilation flexible 75 couplé audit corps allongé 73, dans lequel l'élément de ventilation flexible 75 est configuré pour assurer l'étanchéité entre la première extrémité 71 et la seconde extrémité 72, L'élément de ventilation flexible 75 est en outre configuré pour fournir au moins une partie d'un chemin d'évent entre la première extrémité et la deuxième extrémité en réponse à une différence de pression prédéterminée entre la première extrémité et la deuxième extrémité.

Le reniflard 70 est vissé dans un alésage de réception 48 usiné dans le carter de fermeture 40b qui débouche dans une cavité 47 de réception du reniflard formée dans le carter de fermeture 40b. La première extrémité 71 du reniflard débouche dans la cavité 47 de réception du reniflard. La cavité 47 est généralement issue de fonderie avec le carter de fermeture 40b et peut comprendre une partie de l'alésage de réception 48.

Sur la figure 1, le mécanisme de transmission M est représenté dans une position correspondant à sa position lorsqu'il est monté dans un véhicule stationné sur un plan horizontal. Il comporte une partie relativement basse et une partie relativement haute.

Afin d'améliorer la lubrification au sein du mécanisme de transmission M, celui-ci comporte notamment un dispositif de lubrification dans lequel on retrouve :
- un collecteur 50 de réception et de distribution de lubrifiant comprenant au moins un fond 54 et un pourtour extérieur 58, le collecteur 50 de réception et de distribution de lubrifiant étant disposé dans le carter de fermeture 40b entre la paroi périphérique 46 et le premier axe de rotation X1 ;
- la première roue dentée 11 mobile en rotation autour du premier axe de rotation X1 qui projette du lubrifiant depuis la denture externe vers le collecteur 50.

Le fond 54 et le pourtour extérieur 58 forment un premier réceptacle 51 pour le lubrifiant.

Le collecteur 50 de réception et de distribution de lubrifiant est disposé axialement, selon le premier axe de rotation X1, entre l'embase 45 du carter de fermeture 40b et la première roue dentée 11, la première roue dentée 11 tournant autour du premier axe de rotation X1 selon un sens privilégié, le premier réceptacle 51 du collecteur 50 de réception et de distribution de lubrifiant faisant face à la première roue dentée 11 de manière à recevoir le lubrifiant projeté par la denture.

La lubrification de ce dispositif de réduction de vitesse est réalisée par la projection de lubrifiant, par exemple de l'huile, convoyé par la première roue dentée 11. L'huile en provenance du fond du mécanisme de transmission est remontée vers le haut par l'intermédiaire de la rotation de la première roue dentée 11, puis est projetée vers la paroi périphérique 46 et en direction du premier réceptacle 51.

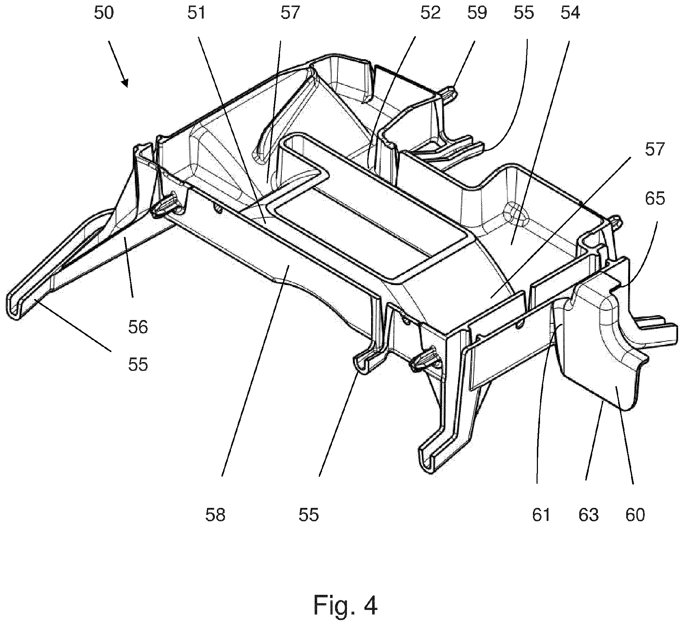

Comme illustré sur les figures 1 et 4, le collecteur 50 de réception et de distribution de lubrifiant a la particularité de comprendre un premier réceptacle 51 et un deuxième réceptacle 52 disposés de part et d'autre de la première roue dentée 11. Notamment, le premier réceptacle 51 et le deuxième réceptacle 52 sont disposés de part et d'autre d'un plan géométrique YZ perpendiculaire au premier axe de rotation X1, le plan géométrique YZ passe par exemple par le plan médian de la première roue dentée 11. Le plan géométrique YZ traverse la paroi périphérique 46 du carter de fermeture 40b selon une direction sensiblement perpendiculaire à celle-ci.

Le premier réceptacle 51 et le deuxième réceptacle 52 du collecteur 50 de réception et de distribution de lubrifiant sont reliés par l'intermédiaire de gouttières 57 acheminant le lubrifiant depuis le premier réceptacle vers le deuxième réceptacle sous l'effet de la gravité. Ainsi, le premier réceptacle 51, le deuxième réceptacle 52 et les gouttières 57 forment un réceptacle commun apte à recevoir le lubrifiant projeté au sein du carter.

Le collecteur 50 de réception et de distribution de lubrifiant comprend une ouverture centrale 53 disposée entre le premier réceptacle 51 et le deuxième réceptacle 52 au sein de laquelle la première roue dentée 11 est insérée partiellement de manière à pouvoir projeter du lubrifiant depuis la denture vers le fond du collecteur de réception et de distribution de lubrifiant, le fond 54 du collecteur de réception et de distribution de lubrifiant entourant complètement l'ouverture centrale 53.

Le collecteur 50 de réception et de distribution de lubrifiant comprend également une paroi de protection additionnelle 60 qui fait saillie en dehors du premier réceptacle 51 et du deuxième réceptacle 52, la paroi de protection additionnelle 60 recouvrant au moins partiellement l'entrée 47a de la cavité 47 de réception du reniflard.

La paroi de protection additionnelle 60 protège le reniflard 70 de toute projection directe de lubrifiant à l'intérieur de la cavité et sur le reniflard lui-même. La paroi de protection additionnelle 60 fait saillie depuis les surfaces externes du réceptacle 51 formées par le fond 54 et le pourtour extérieur 58. Les surfaces internes du réceptacle sont en contact avec le lubrifiant collecté au sein du collecteur 50 de réception et de distribution de lubrifiant.

L'entrée 47a de la cavité 47 de réception du reniflard est disposée axialement selon le premier axe de rotation X1 entre l'embase 45 du carter de fermeture 40b et le plan de joint 48 du carter de fermeture. La paroi de protection additionnelle 60 est disposée axialement entre l'entrée 47a de la cavité 47 de réception du reniflard et le plan de joint 48 du carter de fermeture.

La paroi de protection additionnelle 60 est décalée axialement d'une valeur de 2 mm par rapport à l'entrée 47a de la cavité de réception du reniflard. Ainsi la paroi recouvre sans contact l'entrée de la cavité de réception.

Dans ce premier mode de réalisation, la paroi de protection additionnelle 60 est issue de matière avec le pourtour extérieur 58, c'est-à-dire obtenue par injection plastique. La paroi de protection additionnelle 60 comprend notamment une portion de raccordement 61 qui fait la jonction avec le pourtour extérieur 58, la portion de raccordement 61 étant orientée perpendiculairement à la paroi de protection additionnelle 60.

Des nervures de rigidification 65 relient le pourtour extérieur 58 à la paroi de protection additionnelle 60. Les nervures de rigidification 65 présentent des formes complémentaires à la paroi de raccordement 61.

Comme illustré sur la figure 2, une partie du contour extérieur 63 de la paroi de protection additionnelle 60 est une homothétie du contour d'entrée 47a de la cavité 47 de réception du reniflard selon un rapport d'échelle supérieur à 1. L'homothétie correspond à une reproduction du contour avec un agrandissement.

Dans cet exemple, le collecteur 50 de réception et de distribution de lubrifiant est maintenu en position partiellement par le carter principal 40a, à l'aide de pattes de fixation 59.

Le collecteur 50 de réception et de distribution de lubrifiant comprend des conduites de sortie de lubrifiant 55 débouchant en direction de différentes zones du carter 40a, 40b. Généralement, les conduites de sortie de lubrifiant 55 sont orientées en direction des paliers de guidages, et plus précisément en direction des logements cylindriques aménagés dans le carter. Certaines conduites de sortie de lubrifiant 55 sont maintenues en position sur le collecteur 50 de réception et de distribution de lubrifiant par l'intermédiaire de raidisseurs 56 issus de matière avec le fond 54.

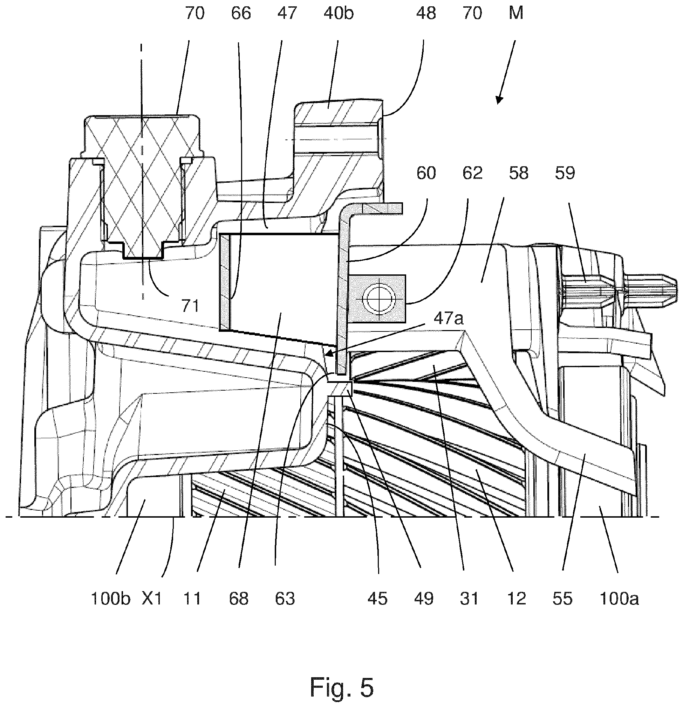

On va maintenant décrire en référence à la figure 5, un mécanisme de transmission M selon un deuxième mode de réalisation de l'invention qui se distingue du premier mode par le fait que la paroi de protection additionnelle 60 est rapportée sur le pourtour extérieur 58 du collecteur 50 de réception et de distribution de lubrifiant. Plus précisément, la paroi de protection additionnelle 60 comprend une portion d'appui 62 qui fait la jonction avec le pourtour extérieur 58.

Comme pour le premier mode de réalisation, le reniflard 70 est vissé dans le carter de fermeture 40b qui débouche dans une cavité 47 de réception du reniflard. La première extrémité 71 du reniflard débouche dans la cavité 47 de réception du reniflard.

Dans ce deuxième mode de réalisation, la portion d'appui 62 est fixée par rivetage sur le pourtour extérieur 58. La portion d'appui 62 fait la jonction avec le collecteur 50. En variante, la portion d'appui peut être fixée par soudage à chaud, ou par collage sur le pourtour extérieur et/ou le fond.

La paroi de protection additionnelle 60 est réalisée en matière plastique injectée comme pour le collecteur 50 de réception et de distribution de lubrifiant mais pourrait être obtenue par un procédé de fabrication différent. Par exemple, la paroi de protection additionnelle 60 peut être obtenue par emboutissage d'une tôle métallique.

La paroi de protection additionnelle 60 comprend un capot de protection 66 décalé axialement qui est inséré dans la cavité 47, le capot de protection 66 étant lié solidairement à la paroi de protection additionnelle 60. Le capot de protection 66 est sensiblement parallèle à la paroi de protection additionnelle 60. Le capot de protection 66 est relié à la paroi de protection additionnelle 60 par l'intermédiaire d'un bras de renfort 68 orienté perpendiculairement.

Une protubérance de carter 49, issue de l'embase 45 du carter de fermeture 40b, entoure la paroi de protection additionnelle 60. La protubérance de carter 49 suit partiellement le contour extérieur 63 de la paroi de protection additionnelle 60. Un espace est ménagé entre la protubérance de carter 49 et le contour extérieur 63, l'espace étant proche d'une valeur de 2 mm.

Dans les différents modes de réalisation décrits ici, la paroi de protection additionnelle 60 recouvre sans contact l'entrée de la cavité 47 de réception du reniflard avec précision malgré les tolérances de fabrication liées aux procédés d'obtention des carters et des collecteurs d'huile, tout en conservant des méthodes d'assemblage simples. En variante non représentée, la paroi de protection additionnelle 60 peut recouvrir avec contact une partie de l'entrée de la cavité 47 de réception du reniflard mais en prenant soin de préserver au moins un passage d'air au niveau de l'entrée 47a afin de ne pas rendre complètement étanche la cavité 47 avec le reste de l'intérieur du carter.

Naturellement, l'invention est décrite dans ce qui précède à titre d'exemple. Il est entendu que l'homme du métier est à même de réaliser différentes variantes de réalisation de l'invention sans pour autant sortir du cadre de l'invention. Par exemple, l'invention qui a été décrite ici dans le cadre d'un dispositif de réduction de vitesse à un seul rapport peut aussi être appliquée sur un dispositif de réduction à deux rapports de vitesse voir plus de deux rapports. L'invention peut également être appliquée au dispositif de réduction de vitesse de type coaxial pour lequel l'arbre d'entrée et l'arbre de sortie du mécanisme de transmission M sont concentriques.

## Revendications

1. Mécanisme de transmission (M) à lubrification interne, comprenant :
- un dispositif de réduction de vitesse (R) comprenant au moins un premier arbre de transmission (10) s'étendant le long d'un premier axe de rotation (X1) et portant de façon coaxiale une première roue dentée (11),
- un carter (40a, 40b) en forme de creux comprenant une embase (45) et une paroi périphérique (46) issue de matière avec l'embase, la paroi périphérique entourant en partie le dispositif de réduction de vitesse,
- un reniflard (70) supporté par le carter (40a, 40b), une première extrémité (71) du reniflard débouchant dans une cavité (47) de réception du reniflard formé dans le carter,
- un collecteur (50) de réception et de distribution de lubrifiant disposé dans le carter (40a, 40b) entre la paroi périphérique (46) et le premier axe de rotation (X1),
**caractérisé en ce que** le collecteur (50) de réception et de distribution de lubrifiant comprend un fond (54) et un pourtour extérieur (58) qui forment au moins un premier réceptacle (51, 52) pour le lubrifiant et une paroi de protection additionnelle (60) qui fait saillie en dehors du premier réceptacle, la paroi de protection additionnelle recouvrant au moins partiellement l'entrée (47a) de la cavité (47) de réception du reniflard.

2. Mécanisme de transmission (M) selon la revendication 1, dans lequel la paroi de protection additionnelle (60) est issue de matière avec le pourtour extérieur (58) et/ou le fond (54), la paroi de protection additionnelle (60) comprend une portion de raccordement (61) qui fait la jonction avec le pourtour extérieur (58) et/ou le fond (54).

3. Mécanisme de transmission (M) selon la revendication précédente, dans lequel la portion de raccordement (61) est orientée perpendiculairement à la paroi de protection additionnelle (60).

4. Mécanisme de transmission (M) selon la revendication 1, dans lequel la paroi de protection additionnelle (60) est rapportée sur le pourtour extérieur (58) et/ou le fond (54), la paroi de protection additionnelle (60) comprend une portion d'appui (62) qui fait la jonction avec le pourtour extérieur et/ou le fond.

5. Mécanisme de transmission (M) selon la revendication précédente, dans lequel la portion d'appui (62) est fixée par rivetage, soudage à chaud, collage sur le pourtour extérieur (58) et/ou le fond (54).

6. Mécanisme de transmission (M) selon l'une des revendications précédentes, dans lequel une partie du contour extérieur (63) de la paroi de protection additionnelle (60) est une homothétie du contour d'entrée (47a) de la cavité (47) de réception du reniflard selon un rapport d'échelle (K).

7. Mécanisme de transmission (M) selon l'une des revendications précédentes, dans lequel la paroi de protection additionnelle (60) est décalée axialement selon le premier axe de rotation (X1) par rapport à l'entrée de la cavité (47) de réception du reniflard.

8. Mécanisme de transmission (M) selon l'une des revendications précédentes, dans lequel la paroi de protection additionnelle (60) comprend un capot de protection (66) décalé axialement qui est inséré dans la cavité (47), le capot de protection (66) étant lié solidairement à la paroi de protection additionnelle (60).

9. Mécanisme de transmission (M) selon l'une des revendications 1 à 8, dans lequel le carter (40a, 40b) est un carter de fermeture (40b) qui comprend un plan de joint (48) apte à accueillir le plan de joint d'un carter principal (40b), l'entrée (47a) de la cavité (47) de réception du reniflard étant disposée axialement selon le premier axe de rotation (X1) entre l'embase (45) du carter de fermeture (40b) et le plan de joint (48) du carter de fermeture, la paroi de protection additionnelle (60) est disposée axialement entre l'entrée (47a) de la cavité (47) de réception du reniflard et le plan de joint (48) du carter de fermeture.

10. Mécanisme de transmission (M) selon l'une des revendications 1 à 8, dans lequel le carter (40a, 40b) est un carter principal (40a) apte à supporter une machine électrique qui comprend un plan de joint (48) apte à accueillir le plan de joint d'un carter de fermeture (40b), l'entrée (47a) de la cavité (47) de réception du reniflard étant disposée axialement selon le premier axe de rotation (X1) entre l'embase (45) du carter principal (40a) et le plan de joint (48) du carter principal, la paroi de protection additionnelle (60) est disposée axialement entre l'entrée (47a) de la cavité (47) de réception du reniflard et le plan de joint (48) du carter principal.

11. Mécanisme de transmission (M) selon l'une des revendications 1 à 8, dans lequel le carter (40a, 40b) comprend un carter principal (40a) et un carter de fermeture (40b) rapporté sur le carter principal de sorte à former une enceinte close autour du dispositif de réduction de vitesse (R), le collecteur (50) de réception et de distribution de lubrifiant étant maintenu en position partiellement par le carter principal (40a) et partiellement par le carter de fermeture (40b).

12. Mécanisme de transmission (M) selon l'une des revendications précédentes, dans lequel le collecteur (50) de réception et de distribution de lubrifiant est disposé axialement, selon le premier axe de rotation (X1), entre l'embase du carter et la première roue dentée, la première roue dentée (11) tournant autour du premier axe de rotation (X1) selon un sens privilégié, le collecteur (50) de réception et de distribution de lubrifiant faisant face à la première roue dentée (11) de manière à recevoir le lubrifiant projeté par la denture.

13. Mécanisme de transmission (M) selon l'une des revendications précédentes, comprenant un premier palier de guidage (100a, 100b) supportant le premier arbre de transmission (10) par rapport au carter (40a, 40b), le premier palier de guidage étant inséré dans un premier logement cylindrique aménagé dans le carter, le collecteur (50) de réception et de distribution de lubrifiant comprenant une conduite de sortie (53) de lubrifiant débouchant en direction du logement cylindrique.

14. Ensemble de propulsion électrique (1) comportant une machine électrique (60) et un mécanisme de transmission (M) selon l'une des revendications précédentes, le système de réduction de vitesse (R) comprenant un deuxième arbre de transmission (20) guidé en rotation autour d'un deuxième axe de rotation (X2) par un deuxième palier de guidage (200a, 200b), et un troisième arbre de transmission (30) guidé en rotation autour d'un troisième axe de rotation (X3) par un troisième palier de guidage (300a, 300b), l'un des arbres de transmission choisi parmi le premier, le deuxième et le troisième arbre de transmission (10, 20, 30) est solidaire en rotation de l'arbre moteur de la machine électrique.
